# EUROPÄISCHE PATENTSCHRIFT

(11) **EP 3 963 678 B1**
(45) Veröffentlichungstag und Bekanntmachung des Hinweises auf die Patenterteilung: **30.10.2024**
(21) Anmeldenummer: 20724495.5
(22) Anmeldetag: 07.05.2020
(51) Int. Cl.: H01T 1/02, H01T 1/14, H01T 4/14, H01H 39/00, H01H 85/00, H01H 85/30, H02H 9/04, H01T 2/02

(54) **BLITZSCHUTZ-FUNKENSTRECKENANORDNUNG UND VERFAHREN ZUM BETREIBEN EINER BLITZSCHUTZ-FUNKENSTRECKENANORDNUNG**
LIGHTNING PROTECTION SPARK GAP ASSEMBLY AND METHOD FOR OPERATING A LIGHTNING PROTECTION SPARK GAP ASSEMBLY
ARRANGEMENT ÉCLATEUR DE PROTECTION CONTRE LA FOUDRE ET PROCÉDÉ DE FONCTIONNEMENT D'UN ARRANGEMENT ÉCLATEUR DE PROTECTION CONTRE LA FOUDRE

(30) Priorität: 09.05.2019 DE 102019206730; 10.07.2019 DE 102019210234
(43) Veröffentlichungstag der Anmeldung: 09.03.2022
(73) Patentinhaber: DEHN SE, 92318 Neumarkt i.d. OPf. (DE)
(72) Erfinder: EHRHARDT, Arnd, 92318 Neumarkt (DE); BÜHLER, Klaus, 92318 Neumarkt (DE)
(74) Vertreter: Isarpatent
(86) Internationale Anmeldenummer: PCT/EP2020/062651
(87) Internationale Veröffentlichungsnummer: WO 2020/225339

(56) Entgegenhaltungen:
- EP-A1- 3 166 193
- DE-A1- 102011 051 738
- DE-A1- 102017 126 419
- DE-C- 128 433

## Beschreibung

Die vorliegende Erfindung betrifft eine Blitzschutz-Funkenstreckenanordnung und ein Verfahren zum Betreiben einer Blitzschutz-Funkenstreckenanordnung.

Obwohl auf beliebige Blitzschutz-Funkenstreckenanordnungen mit divergierenden Elektroden anwendbar, werden die vorliegende Erfindung und die ihr zugrunde liegende Problematik im Hinblick auf Blitzschutz-Funkenstreckenanordnungen mit divergierenden Elektroden erläutert, welche eine Löschkammer mit einer Mehrzahl von Löschblechen aufweisen.

### Stand der Technik

Die EP 3 166 193 A1 beschreibt eine Schalteinrichtung für Überspannungsschutzgeräte, bestehend aus einem stoßstromfähigen ersten Schaltelement, insbesondere einer Sicherung, welche mit einem ersten und einem zweiten Ableiter des Überspannungsschutzgeräts eine Reihenschaltung eines Stoßstrompfads bildet, sowie einem Fehlerstrompfad, welcher parallel zum ersten Ableiter geschaltet ist.

im Fehlerstrompfad ist mindestens ein zweites Schaltelement angeordnet und derart mit einem Kurzschließer mechanisch gekoppelt, dass bei andauernden unzulässigen Belastungen des zweiten Ableiters im Stoßstrompfad ein Kurzschluss entsteht mit der Folge des Auslösens des ersten Schaltelements und galvanischer Trennung des Stoßstrompfads vom jeweiligen Netz.

Die DE 10 2017 126 419 A1 und die DE 10 2017 119 285 A1 offenbaren triggerbare Schmelzsicherungen, welche als Aktor über einen Brückenzünder verfügen. Die vorliegende Erfindung beschreibt Methoden zur Aktivierung des Brückenzünders bei fehlerhafter Netzfolgeströmen beim Einsatz der Schmelzsicherungen als Schutzvorrichtung für Blitzschutz-Funkenstrecken.

Die Aktivierung von triggerbaren Schmelzsicherungen erfolgt üblicherweise durch die thermische Überlastung eines Hilfsschmelzleiters, welcher im Allgemeinen zur Aktivierung einer reaktiven Substanz (Sprengstoff, exotherme Masse, Gaserzeugung etc.) genutzt wird. Die Aktivierung wird häufig durch direkte Belastungsgrößen oder auch durch eine unabhängige Signalgabe von außen bzw. auch in Kombination durchgeführt.

Gemäß der DE 1 064 613 wird eine derartige Sicherung beispielweise durch den eigenen Spannungsabfall infolge einer bestimmten Stromhöhe bzw. eines bestimmten Stromanstieges ausgelöst, indem durch einen spannungsabhängigen Schalter ein Stromfluss über einen Hilfsschmelzleiter zur Zündung eine Sprengmasse, welche den Hauptschmelzleiter zerstört zum Fließen kommt.

Gemäß der DE 1 904 244 wird in einer Trenneinrichtung ein entsprechender Hilfsschmelzleiter zur Zündung einer Sprengladung über einen Übertrager aktiviert, welche in Abhängigkeit der Stromstärke, des Stromanstieges, der Spannung bzw. des Spannungsanstieges etc. angesteuert wird.

Die DE 10 2008 047 256 A1 offenbart eine triggerbare Sicherung, welche ebenfalls durch eine Sprengladung betätigbar ist. Neben Aktivieiungsmöglichkeiten aus einer elektronischen Steuereinheit, welche unmittelbaren Belastungsgrößen, wie Strombelastung etc., auswertet, besitzt diese Anordnung auch einen Steuereingang für Fremdsignale. Somit können die zu schützenden Einrichtungen nahezu beliebige und spezifische Belastungskriterien selbsttätig detektieren und die

Überstromschutzeinrichtung unabhängig von der reinen Strombelastung aktivieren. Somit können auch sekundäre Wirkungen einer Strom- bzw. Spannungsbelastung beispielsweise reduzierte Isolationswerte, Leck- Fehlerströme mit Temperaturerhöhung bzw. Brandgefahr, Störlichtbögen etc. sogar ggf. vor einem Schadenseintritt mit Kurzschlussstrom zur Auslösung herangezogen werden.

Die US 2,305,436 zeigt die Nutzung einer triggerbaren Schmelzsicherung in Kombination mit einem Blitzableiter. Bei der Belastung des Ableiters mit Impulsströmen wird der Hilfsschmelzleiter mit umgebender Sprengladung kaum belastet. Nur bei netzfrequenten Strömen wird mit Hilfe einer Frequenzweiche durch die Erwärmung eines Heizdrahtes die Zündung der Treibladung bewirkt.

Die US 4,807,082 offenbart eine Aktivierungseinrichtung für eine chemisch triggerbare Sicherung. Die Aktivierungseinrichtung wird durch eine Schutzeinrichtung bei transienten Belastungen passiviert.

In der DE 20 2009 018 086 wird ein Überspannungsableiter mit einer pyrotechnischen Abtrennvorrichtung offenbart, welche insbesondere durch am Überspannungsableiter auftretende unerwünschte Lichtbögen direkt und auch durch übliche Kriterien zur Bewertung des Belastungszustandes eines Überspannungsableiters mittels einer Steuerung und deren Signalgabe aktiviert werden kann.

Die DE 10 2011 051 738 A1 offenbart eine Blitzschutz-Funkenstrecke mit divergierenden Elektroden, wobei der Abstand der gegenüberliegenden Elektrodenflächen im Zündbereich eng gehalten ist und sich im Laufbereich aufweitet. Die Impulsstrombelastung begrenzt sich daher im Wesentlichen auf den Zündbereich, während die Netzfolgeströme im Laufbereich die divergierenden Elektroden entlanglaufen und der Netzfolgestrom-Lichtbogen in einer Löschkammer aufgeteilt und gelöscht wird.

### Offenbarung der Erfindung

Die vorliegende Erfindung schafft eine Blitzschutz-Funkenstreckenanordnung nach Anspruch 1 und ein Verfahren zum Betreiben einer Blitzschutz-Funkenstreckenanordnung nach Anspruch 21.

Bevorzugte Weiterbildungen sind Gegenstand der jeweiligen Unteransprüche.

### Vorteile der Erfindung

Der Kern der Erfindung ist die Überwachung bzw. Bewertung der Reduzierung der Fähigkeit zur Netzfolgestrombegrenzung von Blitzschutz- Funkenstrecken, beispielsweise durch Alterung bzw. Überlastung, zur rechtzeitigen Abtrennung durch Ansteuerung des Brückenzünders einer Schmelzsicherung.

Bei dem Ansprechen von Blitzschutz- Funkenstrecken durch Blitzeinschlag können nach der Ableitung der Impulsströme derartige von der Netzspannung des Versorgungsnetzes verursachte Netzfolgeströme auftreten. Infolge der hohen Strombegrenzung dieser Ströme durch die Löschkammer ist die Amplitude der Netzfolgeströme i.a. deutlich geringer als die Amplitude der Impulsströme. Durch die hohe Strombegrenzung wird zudem die Zeitdauer der Netzfolgeströme ebenfalls auf 1 ms bis wenige ms begrenzt.

Somit liegt die Zeitdauer der Netzfolgeströme bei Normalfunktion der Blitzschutz- Funkenstrecken im Bereich der Zeitdauer von energiereichen Impulsstrombelastungen, und die Höhe ist geringer als die Höhe der Impulsbelastungen. Ebenso ist die spezifische Energie eines Netzfolgestromes kleiner als die spezifische Energie des Impulsstromes, welcher im Betriebsbereich der jeweiligen Blitzschutz- Funkenstrecke liegt.

Übliche Lösungen, welche auf die Stromhöhe, Stromsteilheit, Spannungshöhe, Spannungssteilheit zur Auslösung einer Sicherung abzielen, sind ungeeignet, weil hier bei Überspannungsgeräten nur eine Abstimmung auf die transiente Impulsbelastung gegeben ist, da diese Werte bei Netzfolgestrom alle deutlich geringer sind, als transiente Belastungsgrößen, welche die Geräte mehrfach beherrschen müssen, ohne abgetrennt zu werden. Da auch die Zeitdauer von Netzfolgestrom und Impulsbelastung ähnlich ist, können nur sehr lange Zeitdauern als fehlerhaft betrachtet werden.

Dadurch dass die Indikatoreinrichtung erfindungsgemäß derart mit der ersten oder zweiten divergierende Elektrode und/oder der Löschkammer elektrisch verbunden ist, dass sie den Netzfolgestromverlauf im Laufbereich des Netzfolgestrom-Lichtbogens erfasst, lässt sich eine räumliche und zeitliche Trennung vom Impulsstrom erreichen und dennoch eine rasche Ansteuerung des Brückenzünders nach beispielsweise 1 ms bis wenige ms.

Vorteilhafterweise ermöglicht die Erfindung somit eine nahezu verzugsfreie Aktivierung des Brückenzünders bei fehlerhaften Netzfolgeströmen unabhängig und räumlich getrennt von vorhergehenden eingeprägten Impulsströmen.

Die Ansteuerung erfolgt nicht während des Impulsstroms, da sonst die Sicherung überlastet werden könnte und eine Gefährdung durch eine zu rasche Betätigung bestünde. Dies wird durch die erfindungegemäße Lösung der geometrischen und somit zeitlichen Trennung von Impuls- und Folgestrom bzw. mechanische Verzögerung durch eine sehr einfache Lösung (keine aufwendige Messung und Messdatenauswertung) vermieden.

Die erfindungsgemäße Lösung ist einfach und preisgünstig und schützt die Blitzschutz-Funkenstrecken vor einer Überlastung durch eine elektrische Abtrennung. Die Abtrennung wird hierbei sowohl bei einer Gefährdung durch Impulsströme als auch durch Leck- und Netzfolgeströme bereits vor einer Überlastung der Blitzschutz- Funkenstrecke realisiert.

Bei einmaligen Impulsstrombelastungen oberhalb des Arbeitsbereiches der Blitzschutz-Funkenstrecke erfolgt eine Abtrennung durch das passive Ansprechen (Schmelzen) der triggerbaren Schmelzsicherung bereits infolge der I²t-Belastung des Impulses. Während der Impulsstromdauer wird eine Ansteuerung des Brückenzünders vermieden, da der Laufbereich der divergierenden Elektroden den Impulsstrom nicht sieht. Somit ist die triggerbare Schmelzsicherung ohne Triggerung bereits eine vollfunktionsfähige Sicherung mit passiver Zeit-/Strom-Kennlinie.

Bei einer Einschränkung des Folgestromlöschvermögens der Blitzschutz-Funkenstrecke lässt sich eine Bewertung der spezifischen Energie unabhängig von der Höhe des Impulsstromes durchführen.

Die triggerbare Schmelzsicherung wird bei einer Überschreitung des ersten vorbestimmten Kriteriums, z.B. I²t-Kriteriums, mittels einer mechanischen oder elektrischen Indikatoreinrichtung, mit einer durch die Laufzeit des Netzfolgestrom-Lichtbogens bedingten Verzugszeit angesteuert, wodurch sich eine sehr rasche Ansteuerung bei auftretendem Netzfolgestrom ergibt. Ggfs. kann eine zusätzlich Verzugszeit über die mechanische oder die elektrische Komponente eingebracht werden.

Eine zusätzliche Ansteuerung bei üblichen sekundären Belastungsgrößen der Blitzschutz-Funkenstrecke bzw. dessen Komponenten, wie Temperatur, Spannung, Druck, Leckstrom etc. bzw. Änderung dieser Größen ist mit einer separaten mechanischen Auslösung oder einer sonstigen Kopplung einfach möglich.

Gemäß einer bevorzugten Ausführungsform weist die erste divergierende Elektrode eine Unterbrechungsstelle auf, so dass die erste divergierende Elektrode einen der Löschkammer zugewandten Elektrodenbereich aufweist, der nur vom Netzfolgestrom erreichbar ist, und wobei die Indikatoreinrichtung zwischen den ersten Hauptanschluss und den Elektrodenbereich geschaltet ist. So lässt sich eine vollkommene Abkopplung des Netzfolgestroms vom Impulsstrom erzielen.

Gemäß einer weiteren bevorzugten Ausführungsform weist die Löschkammer eine Mehrzahl von Löschblechen auf, wobei die Indikatoreinrichtung zwischen eines der Löschbleche und den zweiten Hauptanschluss geschaltet ist.

Gemäß einer weiteren bevorzugten Ausführungsform ist eine Strombegrenzungseinrichtung in Reihe zur Indikatoreinrichtung geschaltet.

Gemäß einer weiteren bevorzugten Ausführungsform weist das eine Löschblech eine Unterbrechungsstelle auf, welche derart angeordnet ist, dass eine elektrische Verbindung zur Indikatoreinrichtung erst nach Einlaufen des Netzfolgestrom-Lichtbogens in die Löschkammer gebildet ist. Dies sorgt dafür, dass das Erfassen des Netzfolgestromverlaufs oder des entsprechenden Anteils des Netzfolgestromverlaufs erst nach vollständigem Einlaufen des Netzfolgestrom-Lichtbogens in die Löschkammer erfolgt.

Gemäß einer weiteren bevorzugten Ausführungsform weist die Löschkammer eine Mehrzahl von Löschblechen auf, wobei die Indikatoreinrichtung zwischen eine erste und zweite Spannungssonde geschaltet ist und wobei die erste und zweite Spannungssonde zwischen jeweils zwei unterschiedlichen benachbarten Löschblechen angeordnet sind.

Gemäß einer weiteren bevorzugten Ausführungsform weist die Löschkammer eine Mehrzahl von Löschblechen auf, wobei die Indikatoreinrichtung zwischen eine Spannungssonde und den zweiten Hauptanschluss geschaltet ist und wobei die Spannungssonde zwischen zwei benachbarten Löschblechen angeordnet ist.

Gemäß einer weiteren bevorzugten Ausführungsform weist die Löschkammer eine Mehrzahl von Löschblechen auf, wobei die Indikatoreinrichtung zwischen zwei Löschbleche geschaltet ist.

Gemäß einer weiteren bevorzugten Ausführungsform weist die Indikatoreinrichtung eine Indikatorsicherung auf, durch welche ein mechanisches Stellglied betätigbar ist, wobei durch das mechanische Stellglied eine Schaltereinrichtung zum Aktivieren des Brückenzünders schließbar ist. Dies ermöglicht eine einfache Integration in die Blitzschutz- Funkenstrecke.

Gemäß einer weiteren bevorzugten Ausführungsform ist eine Stromweiche parallel zur Indikatorsicherung geschaltet.

Gemäß einer weiteren bevorzugten Ausführungsform weist die Indikatoreinrichtung eine Indikatorsicherung auf, wobei der Brückenzünder parallel zur Indikatorsicherung geschaltet ist.

Gemäß einer weiteren bevorzugten Ausführungsform ist eine Strombegrenzungseinrichtung in Reihe zur Indikatoreinrichtung geschaltet.

Gemäß einer weiteren bevorzugten Ausführungsform gehen die Stromhöhe und die Stromdauer des Netzfolgestromverlaufs oder des entsprechenden Anteils des Netzfolgestromverlaufs in das erste vorbestimmte Kriterium ein, wobei insbesondere die Stromhöhe quadratisch und die Stromdauer linear in das erste vorgegebene Kriterium eingehen.

Gemäß einer weiteren bevorzugten Ausführungsform ist eine weitere Indikatoreinrichtung zum Erfassen des Impulsstromverlaufs oder eines entsprechenden Anteils des Impulsstromverlaufs und zum Triggern der Schmelzsicherungseinrichtung durch Aktivieren des Brückenzünders, wenn der erfasste Impulsstromverlaufs oder der entsprechende Anteil des Impulsstromverlaufs ein zweites vorgegebenes Kriterium erfüllt, in Reihe zur Schmelzsicherungseinrichtung geschaltet. So lassen sich Impulsstrom und Netzfolgestrom getrennt bewerten.

Gemäß einer weiteren bevorzugten Ausführungsform weist die weitere Indikatoreinrichtung eine weitere Indikatorsicherung auf, durch welche das mechanische Stellglied oder ein weiteres mechanisches Stellglied betätigbar ist, wobei durch das mechanische Stellglied die Schaltereinrichtung oder durch das weitere mechanische Stellglied eine weitere Schaltereinrichtung zum Aktivieren des Brückenzünders schließbar ist.

Gemäß einer weiteren bevorzugten Ausführungsform ist eine weitere Stromweiche parallel zur weiteren Indikatorsicherung geschaltet.

Gemäß einer weiteren bevorzugten Ausführungsform ist das mechanische Stellglied oder das weitere mechanische Stellglied derart gestaltet, dass das Aktivieren des Brückenzünders um eine vorgegebene Zeitspanne verzögerbar ist, welche derart gewählt ist, dass der Impulsstrom im Wesentlichen abgeklungen ist, bevor der Brückenzünder aktiviert wird.

Gemäß einer weiteren bevorzugten Ausführungsform liegt die vorgegebene Zeitspanne im Bereich 1 ms bis 5 ms.

Gemäß einer weiteren bevorzugten Ausführungsform ist die Schaltereinrichtung oder noch eine weitere Schaltereinrichtung zum Aktivieren des Brückenzünders durch eine Erfassungseinrichtung für sekundäre Parameter, insbesondere Temperatur, Druck und Ausdehnung, schließbar.

Gemäß einer weiteren bevorzugten Ausführungsform gehen die Stromhöhe und die Stromdauer des Impulsstromverlaufs oder des entsprechenden Anteils des Impulsstromverlaufs in das zweite vorbestimmte Kriterium ein, wobei insbesondere die Stromhöhe quadratisch und die Stromdauer linear in das zweite vorgegebene Kriterium eingehen.

### Kurze Beschreibung der Zeichnungen

Es zeigen:
- Fig. 1: ein Schaltungsdiagramm zur Erläuterung einer Blitzschutz-Funkenstreckenanordnung gemäß einer ersten Ausführungsform der vorliegenden Erfindung;
- Fig. 2: ein Schaltungsdiagramm zur Erläuterung einer Blitzschutz-Funkenstreckenanordnung gemäß einer zweiten Ausführungsform der vorliegenden Erfindung;
- Fig. 3: ein Schaltungsdiagramm zur Erläuterung einer Blitzschutz-Funkenstreckenanordnung gemäß einer dritten Ausführungsform der vorliegenden Erfindung;
- Fig. 4: ein Schaltungsdiagramm zur Erläuterung einer Blitzschutz-Funkenstreckenanordnung gemäß einer vierten Ausführungsform der vorliegenden Erfindung;
- Fig. 5: ein Schaltungsdiagramm zur Erläuterung einer Blitzschutz-Funkenstreckenanordnung gemäß einer fünften Ausführungsform der vorliegenden Erfindung;
- Fig. 6: ein Schaltungsdiagramm zur Erläuterung einer Blitzschutz-Funkenstreckenanordnung gemäß einer sechsten Ausführungsform der vorliegenden Erfindung;
- Fig. 7: ein Schaltungsdiagramm zur Erläuterung einer Blitzschutz-Funkenstreckenanordnung gemäß einer siebenten Ausführungsform der vorliegenden Erfindung; und
- Fig. 8: ein Schaltungsdiagramm zur Erläuterung einer Blitzschutz-Funkenstreckenanordnung gemäß einer achten Ausführungsform der vorliegenden Erfindung.

In den Figuren sind gleiche bzw. funktionsgleiche Elemente mit denselben Bezugszeichen versehen.

### Beschreibung der Ausführungsbeispiele

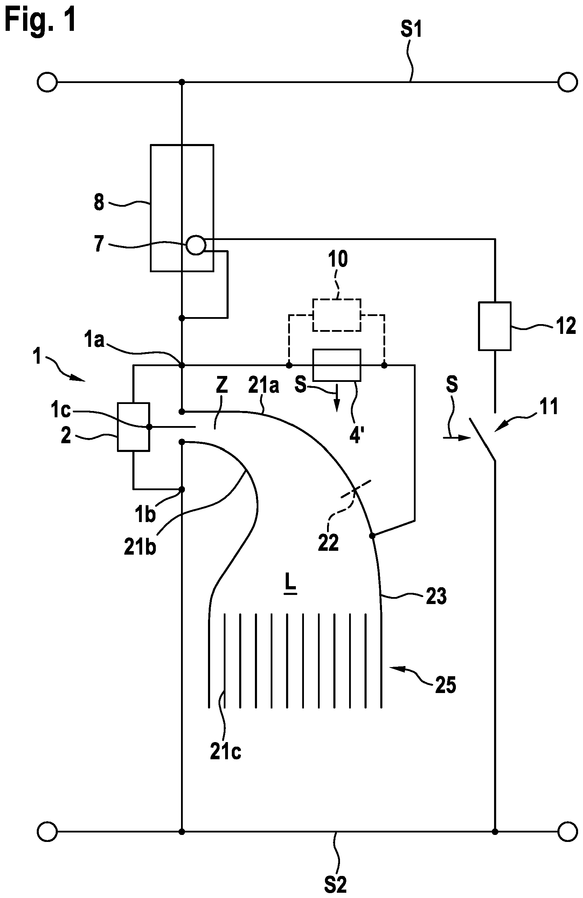

Fig. 1 zeigt ein Schaltungsdiagramm zur Erläuterung einer Blitzschutz-Funkenstreckenanordnung gemäß einer ersten Ausführungsform der vorliegenden Erfindung.

In Fig. 1 bezeichnet Bezugszeichen 1 eine Blitzschutz-Funkenstrecke, welche einen ersten Hauptanschluss 1a und einen zweiten Hauptanschluss 1b aufweist. Weiterhin weist die Blitzschutz-

Funkenstrecke einen Triggeranschluss 1c auf, dem eine Triggerschaltung 2 vorgeschaltet ist. Die Triggerschaltung 2 ist zudem mit dem ersten und zweiten Hauptanschluss 1a, 1b verbunden.

Bei anderen (nicht dargestellten) Ausführungsformen kann die Triggerschaltung 2 nur mit einem der Hauptanschlüsse 1a, 1b verbunden sein.

Bei der Blitzschutz-Funkenstrecke handelt es sich beispielsweise um eine Hörnerfunkenstrecke, wie sie aus der DE 10 2011 051 738 A1 bekannt ist. Insbesondere weist diese Blitzschutz-Funkenstrecke 1 eine erste und eine zweite divergierende Elektrode 21a, 21b auf. In einem Zündbereich Z ist der Abstand der ersten und zweiten divergierenden Elektrode 21a, 21b gering gehalten, wohingegen sich der Abstand der ersten und zweiten divergierenden Elektrode 21a, 21b in einem Laufbereich L zunehmend verbreitert.

Die erste und zweite divergierende Elektrode 21a, 21b enden in einer Löschkammer 25, welche eine Mehrzahl von parallel angeordneten Löschblechen 21c aufweist.

Bei anderen (nicht dargestellten) Ausführungsformen können die Elektroden oder Leitbleche bereits unterhalb der Löschkammer mit einiger Distanz enden. Der Lichtbogen überbrückt dann quasi die Distanz bis zur Löschammer durch Ausdehnung selber.

An den ersten Hauptanschluss 1a ist eine erste Spannungsleitung S1 eines Versorgungsnetzes über eine durch einen Brückenzünder 7 triggerbare Schmelzsicherungseinrichtung 8 anschließbar, und an den zweiten Hauptanschluss 1b ist eine zweite Spannungsleitung S2 des Versorgungsnetzes anschließbar.

Der Brückenzünder 7 ist einerseits mit dem ersten Hauptanschluss 1a verbunden und andererseits über einen Strombegrenzungswiderstand 12 und eine steuerbare Schaltereinrichtung 11 mit der zweiten Spannungsleitung S2 verbindbar.

Im Betrieb der Blitzschutz-Funkenstrecke 1 begrenzt sich die Strombelastung durch die Impulsströme, welche beim Blitzeinschlag auftreten, im Wesentlichen auf den Zündbereich Z der ersten und zweiten divergierenden Elektrode 21a, 21b, während die Netzfolgeströme, welche aufgrund der Spannung des Versorgungsnetzes auftreten, die erste und zweite divergierende Elektrode 21a, 21b in Richtung der Löschkammer im Laufbereich L entlanglaufen. Der Folgestrom-Lichtbogen wird schließlich in der Löschkammer 25 aufgeteilt und gelöscht.

Die inhärente Schmelzfunktion der Schmelzsicherungseinrichtung 8 dient bei diesem Beispiel zu einer Abtrennung der Überspannungsschutzeinrichtung bei Impulsstrombelastungen, welche den ausgewiesenen Nennwert der Einrichtung, beispielsweise von 25 kA Blitzstrom für einen Netzableiter, übersteigen.

Eine Bewertung bzw. Erfassung der Netzfolgeströme erfolgt durch eine Indikatoreinrichtung 4', welche derart gestaltet ist, dass sie die Schmelzsicherungseinrichtung 8 durch Aktivieren des Brückenzünders 7 triggert, wenn der erfasste Netzfolgestromverlauf oder ein entsprechender Anteils des Netzfolgestromverlaufs (Teilstrom) ein erstes vorgegebenes Kriterium erfüllt. Insbesondere kann bei diesem Typ von Blitzschutz-Funkenstrecke 1 die Netzfolgestrombewertung unabhängig vom Impulsstrom im Laufbereich L bzw. innerhalb der Löschkammer 25 erfolgen, da sich der Impulsstrom lokal auf den Zündbereich Z beschränkt.

Bei der vorliegenden ersten Ausführungsform weist die erste divergierende Elektrode 21a eine Unterbrechungsstelle 22 auf, sodass die erste divergierende Elektrode 21a einen der Löschkammer 25 zugewandten Elektrodenbereich 23 aufweist, der nur vom Netzfolgestrom erreichbar ist, da der Netzfolgestrom infolge seines Eigenmagnetfeldes die Unterbrechungsstelle 22 überspringen kann.

Die Indikatoreinrichtung 4' ist somit zwischen den ersten Hauptanschluss 1a und den der Löschkammer 25 zugewandten abgetrennten Elektrodenbereich 23 geschaltet. Die Indikatoreinrichtung 4' weist im vorliegenden Fall eine Indikatorsicherung 4' auf, durch welche ein mechanisches Stellglied S betätigbar ist. Durch das mechanische Stellglied S ist die Schaltereinrichtung 11 zum Aktivieren des Brückenzünders schließbar. Optionell kann der Indikatorsicherung 4' eine frequenzabhängige Stromweiche 10 parallel geschaltet sein, oder beispielsweise ein PTC-Widerstand, wie gestrichelt angedeutet.

Die Indikatorsicherung 4' ist dabei so ausgelegt, dass bei zu hohen oder zu langen Netzfolgeströmen, welche mit einer zu geringen Netzfolgestrombegrenzung bzw. Überlast der Blitzschutz-Funkenstrecke 1 einhergehen, der Schmelzleiter der Indikatorsicherung 4' schmilzt und das mechanische Stellglied S die Schaltereinrichtung 11, welche beispielsweise als Kurzhubtaste ausgelegt ist, zur Aktivierung des Brückenzünders 7 schließt, wodurch die Schmelzsicherungseinrichtung 8 zerstört wird und die Blitzschutz-Funkenstrecke 1 elektrisch von der ersten Spannungsleitung S1 abgekoppelt wird.

Somit ist das erste vorbestimmte Kriterium vorzugsweise ein I²t-Kriterium des Netzfolgestromverlaufs, in das die Stromhöhe quadratisch und die Stromdauer linear eingehen.

Die genaue Festlegung des ersten vorbestimmten Kriteriums, beispielsweise als I²t-Kriterium, hängt von der jeweiligen Bauart der Blitzschutz-Funkenstrecke 1 und den weiteren Randbedingungen ab und kann im Einzelfall empirisch und/oder theoretisch ermittelt werden.

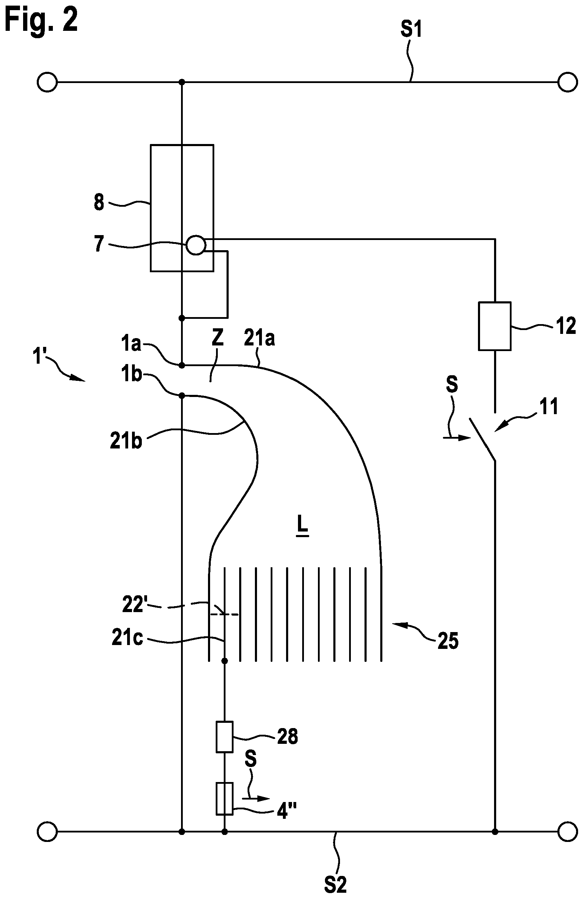

Fig. 2 zeigt ein Schaltungsdiagramm zur Erläuterung einer Blitzschutz-Funkenstreckenanordnung gemäß einer zweiten Ausführungsform der vorliegenden Erfindung.

Bei der zweiten Ausführungsform ist die Blitzschutz-Funkenstrecke 1' ohne Triggeranschluss 1c und ohne Triggerschaltung 2 ausgestaltet. Dies hat jedoch keinen Einfluss auf die Netzfolgestrombewertung, welche bei der zweiten Ausführungsform innerhalb der Löschkammer 25 erfolgt.

Insbesondere ist die Indikatoreinrichtung 4" bei der zweiten Ausführungsform zwischen eines der Löschbleche 21c und den zweiten Hauptanschluss 1b geschaltet.

Vorgeschaltet ist der Indikatoreinrichtung 4" eine Strombegrenzungseinrichtung 28, beispielsweise ein ohmscher Widerstand. Das Löschblech 21c, welches mit der Indikatoreinrichtung 4" verbunden ist, weist eine Unterbrechungsstelle 22' auf, durch welche bewirkt wird, dass der elektrische Kontakt zur Indikatoreinrichtung 4" zum Netzfolgestrom-Lichtbogen erst nach vollständigem Einlaufen und Aufteilen des Netzfolgestrom-Lichtbogens in der Löschkammer 25 realisiert wird.

Wie bei der ersten Ausführungsform ist die Indikatoreinrichtung 4" auch bei der zweiten Ausführungsform eine Indikatorsicherung 4", durch welche das mechanische Stellglied S betätigbar ist, wodurch die Schaltereinrichtung 11 zum Aktivieren des Brückenzünders 7 schließbar ist.

Durch den Netzfolgestrom-Lichtbogen wird das Löschblech 21c mit dem Gegenpotenzial verbunden, und damit belastet der Netzfolgestrom bzw. ein Teilstrom davon die Indikatorsicherung 4". Die Höhe des abgegriffenen Netzfolgestroms kann durch die Strombegrenzungseinrichtung 28 und die Auswahl des konkreten Löschbleches 21c (Spannungsanteil) festgelegt werden. Wie bei der ersten Ausführungsform kann eine frequenzabhängige Stromweiche parallel zur Indikatorsicherung 4" vorgesehen werden.

Ansonsten ist die zweite Ausführungsform wie die erste Ausführungsform ausgestaltet.

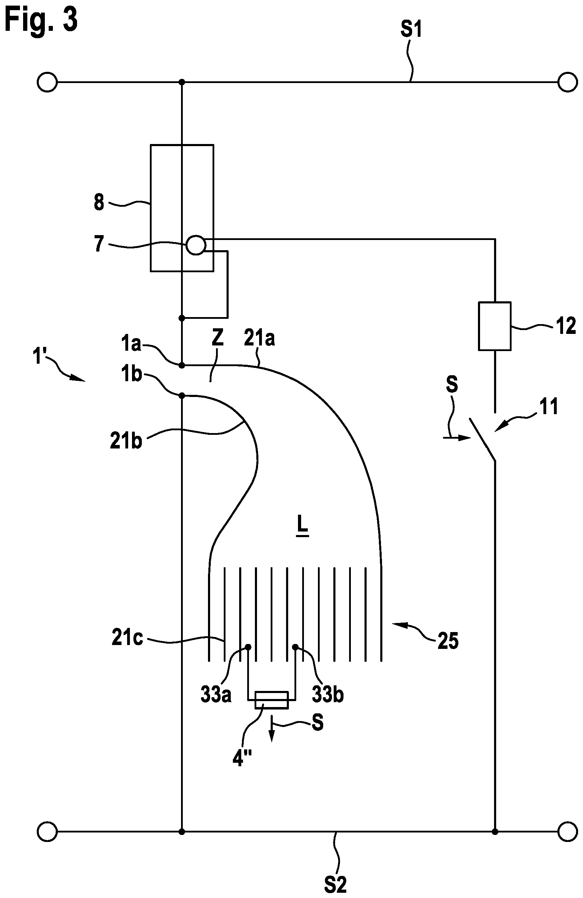

Fig. 3 zeigt ein Schaltungsdiagramm zur Erläuterung einer Blitzschutz-Funkenstreckenanordnung gemäß einer dritten Ausführungsform der vorliegenden Erfindung.

Die dritte Ausführungsform unterscheidet sich von der zweiten Ausführungsform durch die Anordnung und elektrische Kontaktierung der Indikatoreinrichtung 4" in Form der Indikatorsicherung 4".

Insbesondere ist dort die Indikatorsicherung 4" zwischen eine erste und zweite Spannungssonde 33a, 33b geschaltet, wobei die erste und zweite Spannungssonde 33a, 33b zwischen jeweils zwei unterschiedlichen benachbarten Löschblechen 21c angeordnet sind. Bei Netzfolgestrom-Lichtbogenkontakt der Löschbleche 21c fließt entsprechend der treibenden Netzfolgestrom-Lichtbogenspannung zwischen den Löschblechen 21c der Netzfolgestrom oder ein Teilstrom davon über die Indikatorsicherung 4" und löst bei Erfüllen des ersten vorgegebenen Kriteriums die Aktivierung des Brückenzünders 7 aus.

Ansonsten ist die dritte Ausführungsform wie die zweite Ausführungsform ausgestaltet.

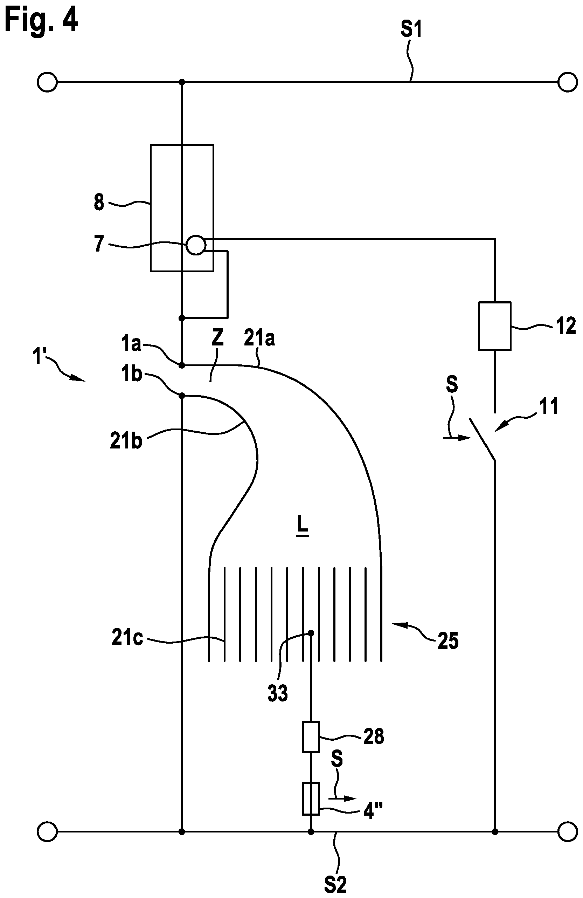

Fig. 4 zeigt ein Schaltungsdiagramm zur Erläuterung einer Blitzschutz-Funkenstreckenanordnung gemäß einer vierten Ausführungsform der vorliegenden Erfindung.

Bei der vierten Ausführungsform ist die Indikatoreinrichtung 4" in Form der Indikatorsicherung 4" zwischen eine Spannungssonde 33 und den zweiten Hauptanschluss 1b bzw. die zweite Spannungsleitung S2 geschaltet, wobei die Spannungssonde 33 zwischen zwei benachbarten Löschblechen 21c angeordnet ist.

Ansonsten ist die vierte Ausführungsform wie die dritte Ausführungsform ausgestaltet.

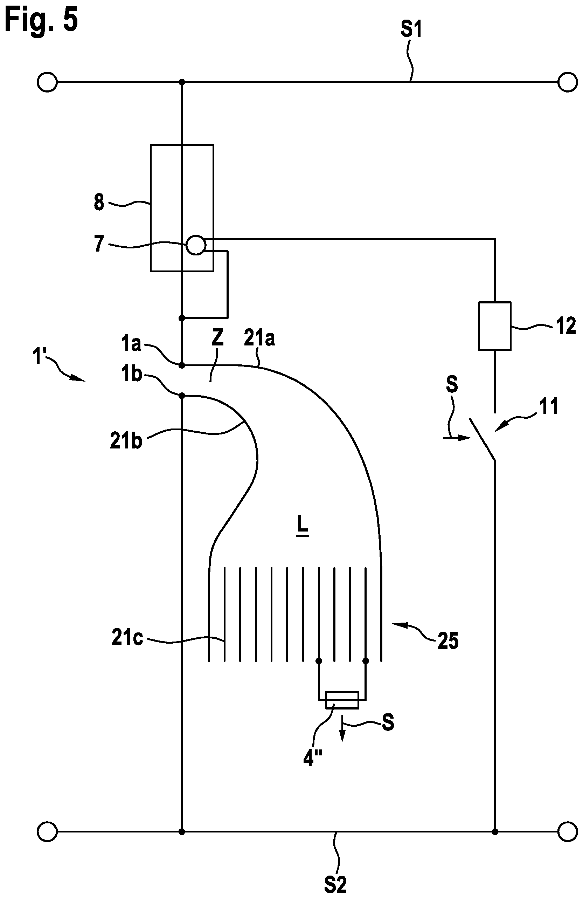

Fig. 5 zeigt ein Schaltungsdiagramm zur Erläuterung einer Blitzschutz-Funkenstreckenanordnung gemäß einer fünften Ausführungsform der vorliegenden Erfindung.

Bei der fünften Ausführungsform ist die Indikatoreinrichtung 4" in Form der Indikatorsicherung 4" zwischen zwei beabstandete Löschbleche 21c geschaltet.

Ansonsten ist die fünfte Ausführungsform wie die vierte Ausführungsform ausgestaltet.

Die zuvor beschriebene erste bis fünfte Ausführungsform erlauben eine sehr gute Abstimmung des Zeitpunktes und der Höhe der Stromauskopplung des Netzfolgestroms bzw. eines Teilstroms davon mit dem Verhalten des Netzfolgestrom-Lichtbogens, wodurch eine funktionelle Abweichung der Blitzschutz-Funkenstrecke 1 bzw. 1' von der Normalfunktion sehr gut über die Zerstörung der Indikatorsicherung 4" erfasst werden kann.

Im Gegensatz zu der zuvor beschriebenen ersten bis fünften Ausführungsform kann der Brückenzünder 7 auch direkt durch die Schaltenergie der Indikatoreinrichtung 4‴ in Form der Indikatorsicherung 4‴ gezündet werden, wie nachstehend im Zusammenhang mit der sechsten und siebenten Ausführungsform erläutert.

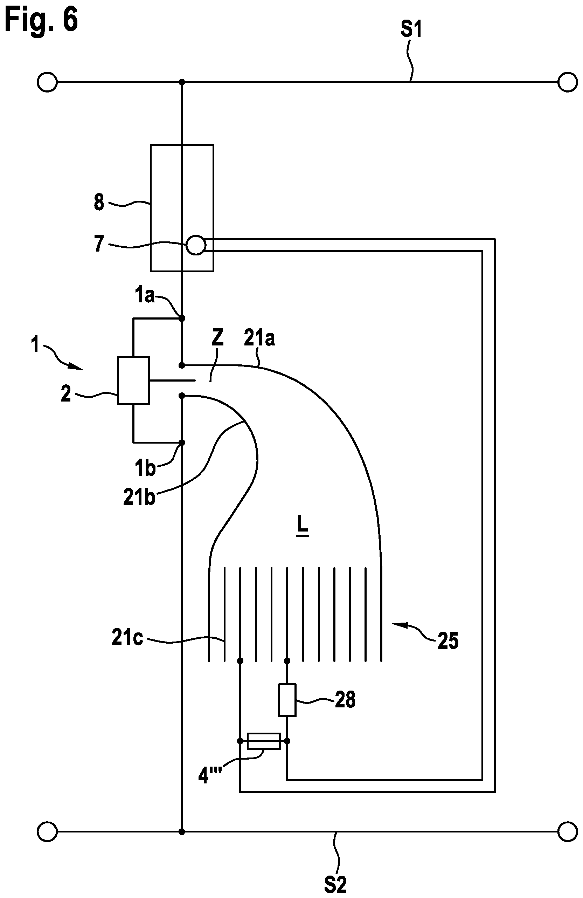

Fig. 6 zeigt ein Schaltungsdiagramm zur Erläuterung einer Blitzschutz-Funkenstreckenanordnung gemäß einer sechsten Ausführungsform der vorliegenden Erfindung.

Bei der sechsten Ausführungsform ist die Blitzschutz-Funkenstrecke 1 wiederum eine triggerbare Blitzschutz-Funkenstrecke wie bei der oben beschriebenen ersten Ausführungsform.

Die Indikatoreinrichtung 4‴ in Form der Indikatorsicherung 4‴ ist an ihren beiden Anschlüssen einerseits mit dem Brückenzünder 7 parallel verbunden und andererseits mit zwei Löschblechen 21c. Die benötigte Schaltenergie kann durch die Auswahl der Löschbleche 21c (Spannungsabfall) und den Strombegrenzungswiderstand 28 eingestellt werden.

Bei Kontakt des Folgestromlichtbogens mit den Löschblechen 21c entsteht ein Spannungsabfall über der Indikatorsicherung 4‴, welche parallel zu dem definierten Schmelzdraht im Brückenzünder 7 geschaltet ist. Der hierdurch bedingte Stromfluss teilt sich auf den Brückenzünder 7 und die Indikatorsicherung 4‴ auf.

Übersteigt die Folgestrombelastung der Löschkammer 25 einen Grenzwert entsprechend dem ersten vorgegebenen Kriterium, wird die Strombelastbarkeit des Schmelzleiters überschritten, und der Brückenzünder 7 löst die Triggerung der Schmelzsicherung 8 aus, wodurch die Blitzschutz-Funkenstrecke 1 vom Netz abgetrennt wird.

Neben der Auslegung der Schmelzleiter der Indikatorsicherung 4‴ und des Brückenzünders 7 zur Steuerung der Stromverteilung kann der Strombegrenzungswiderstand 28 optional vorgesehen sein, welcher den Stromfluss in den Brückenzünder 7 begrenzen kann. Mit dieser Begrenzung kann nicht nur eine Überlastung des Auslösepfades vermieden werden, sondern es kann auch ein zeitlicher Verzug der Auslösung des Brückenzünders 7 eingestellt werden.

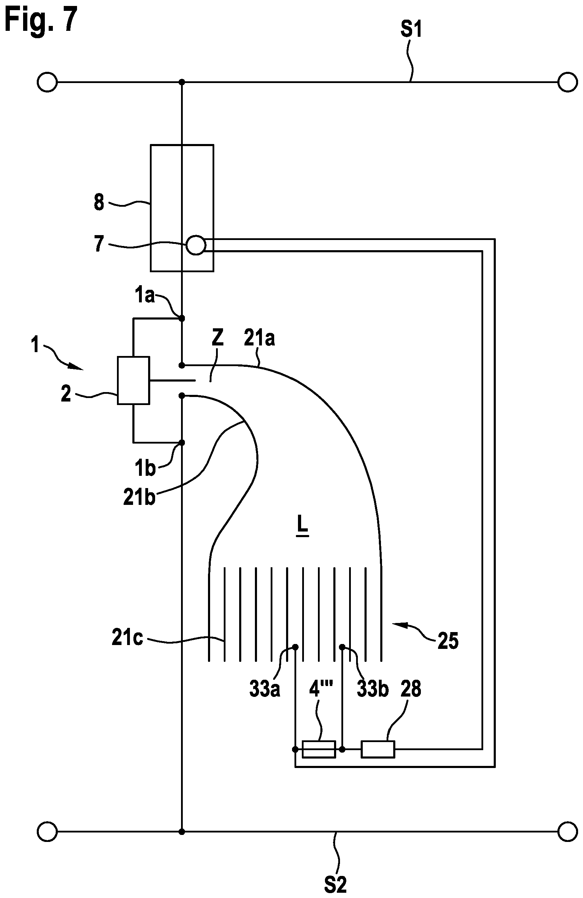

Fig. 7 zeigt ein Schaltungsdiagramm zur Erläuterung einer Blitzschutz-Funkenstreckenanordnung gemäß einer siebenten Ausführungsform der vorliegenden Erfindung.

Bei der siebenten Ausführungsform ist analog zur dritten Ausführungsform die Indikatorsicherung 4‴ mit zwei Spannungssonden 33a, 33b verbunden, welche jeweils zwischen zwei unterschiedlichen benachbarten Löschblechen 21c angeordnet sind.

Ansonsten ist die siebente Ausführungsform wie die sechste Ausführungsform ausgestaltet.

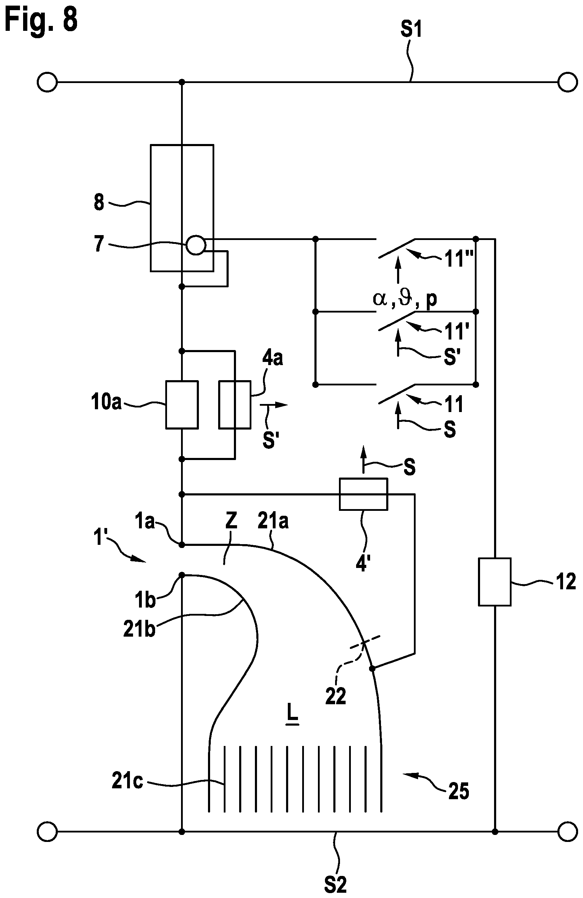

Fig. 8 zeigt ein Schaltungsdiagramm zur Erläuterung einer Blitzschutz-Funkenstreckenanordnung gemäß einer achten Ausführungsform der vorliegenden Erfindung.

Die achte Ausführungsform unterscheidet sich von der ersten Ausführungsform dadurch, dass die Blitzschutz-Funkenstrecke 1' nicht triggerbar ist und eine weitere Indikatoreinrichtung 4a zum Erfassen des Impulsstromverlaufs oder eines entsprechenden Anteils des Impulsstromverlaufs und zum Triggern der Schmelzsicherungseinrichtung 8 durch Aktivieren des Brückenzünders 7, wenn der erfasste Impulsstromverlauf ein zweites vorgegebenes Kriterium erfüllt, in Reihe zur Schmelzsicherungseinrichtung 8 und Blitzschutz-Funkenstrecke 1' geschaltet ist.

Die weitere Indikatoreinrichtung 4a weist eine weitere Indikatorsicherung 4a auf, durch welche ein weiteres mechanisches Stellglied S' betätigbar ist, wobei durch das weitere mechanische Stellglied S' eine weitere Schaltereinrichtung 11', die parallel zur Schaltereinrichtung 11 geschaltet ist, zum Aktivieren des Brückenzünders 7 schließbar ist.

Somit lassen sich bei der achten Ausführungsform die Impulsströme und die Netzfolgeströme mit unabhängigen, lokal getrennten Indikatorsicherungen 4a bzw. 4' überwachen.

Ebenso wie in das erste vorbestimmte Kriterium können Stromhöhe und Stromdauer des Impulsstromverlaufs in das zweite vorbestimmte Kriterium eingehen, insbesondere in Form eines I²t-Kriteriums, welches im Einzelfall empirisch oder theoretisch festzulegen ist.

Bei der achten Ausführungsform ist es vorteilhaft, wenn die weitere Indikatoreinrichtung 4a mechanisches Stellglied S' mit einer inhärenten Verzögerung ist, welche beispielsweise sicherstellt, dass ein Impulsstromverlauf über die Blitzschutz-Funkenstrecke 1 ` abgeleitet werden kann, bevor der Brückenzünder 7 gezündet wird. Solch eine Verzögerung sollte beispielsweise im Bereich von 1 ms bis 5 ms liegen.

Weiterhin können optional ein oder mehrere sekundäre Kriterien bzw. Parameter, wie z.B. Druck p, Temperatur ϑ, Ausdehnung α usw., zur Ansteuerung noch einer weiteren Schaltereinrichtung 11" herangezogen werden, welche parallel zu den Schaltereinrichtungen 11, 11' geschaltet ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Obwohl bei den zuvor beschriebenen Ausführungsformen die Blitzschutz-Funkenstrecke eine Löschkammer mit Löschblechen aufweist, ist die vorliegende Erfindung nicht darauf beschränkt, sondern beispielsweise auch für Mäander-Löschkammern und Isoliersteg-Löschkammern anwendbar.

Bei Löschkammern ohne Lichtbogenaufteilung, wie beispielsweise Isoliersteg- oder Spalt- bzw. Mäanderkammern können ähnliche Indikatoreinrichtungen angewendet werden. Auch diese Löschkammern befinden sich erst im Anschluss an den Lichtbogenlaufbereich und werden im Wesentlichen nur vom Netzfolgestrom erreicht. In den Kammern können zwischen den Stegen bzw. im Spaltbereich in unterschiedlicher Höhe innerhalb der Kammer und auch in unterschiedlicher Distanz beispielsweise Spannungssonden eingebracht werden, welche einen Abgriff einer definierten Spannungsdifferenz bei Lichtbogen erlaubt. Die Höhe der Spannungsdifferenz kann durch einen definierten Schmelzdraht zur Bewertung des Folgestromes ebenso, wie bei Löschkammern mit Löschblechen genutzt werden.

Auch ist die Erfindung nicht auf triggerbare Blitzschutz-Funkenstrecken bzw. die beschriebene triggerbare Blitzschutz-Funkenstrecke beschränkt.

Auch die Indikatoreinrichtung ist nicht auf die beschriebenen Ausführungsformen beschränkt, sondern zur Erfüllung der definierten Funktionen variierbar.

Obwohl also die obigen Ausführungsformen Indikatoreinrichtungen in Form von mechanischen Schalteinrichtungen sind, können auch elektronische bzw. elektrische Schaltereinrichtungen und Komponenten vorgesehen werden, durch welche die genennten Funktionen realisierbar sind.

## Patentansprüche

1. Blitzschutz-Funkenstreckenanordnung, welche aufweist:
eine Blitzschutz-Funkenstrecke (1; 1'), welche einen ersten Hauptanschluss (1a) und einen zweiten Hauptanschluss (1b) aufweist,
wobei an den ersten Hauptanschluss (1a) eine erste Spannungsleitung (S1) eines Versorgungsnetzes und an den zweiten Hauptanschluss (1b) eine zweite Spannungsleitung des Versorgungsnetzes anschließbar ist;
eine durch einen Brückenzünder (7) triggerbare Schmelzsicherungseinrichtung (8), welche zwischen die erste oder zweite Spannungsleitung (S1, S2) und den entsprechenden Hauptanschluss (1a, 1b) der Blitzschutz-Funkenstrecke (1; 1') geschaltet ist; und
eine Indikatoreinrichtung (4'; 4"; 4‴) zum Erfassen sich an einen Impulsstromverlauf anschließenden Netzfolgestromverlaufs oder eines entsprechenden Anteils des Netzfolgestromverlaufs und zum Triggern der Schmelzsicherungseinrichtung (8) durch Aktivieren des Brückenzünders (7), wenn der erfasste Netzfolgestromverlauf oder der entsprechende Anteil des Netzfolgestromverlaufs ein erstes vorgegebenes Kriterium erfüllt,
wobei die Blitzschutz-Funkenstrecke (1; 1') eine erste und eine zweite divergierende Elektrode (21a, 21b) und eine Löschkammer (25) aufweist;
wobei die Indikatoreinrichtung (4`; 4"; 4‴) derart mit der ersten oder zweiten divergierenden Elektrode (21a, 21b) und/oder der Löschkammer (25) elektrisch verbunden ist, dass sie den Netzfolgestromverlauf oder den entsprechenden Anteil des Netzfolgestromverlaufs im Laufbereich (L) des Lichtbogens erfasst.

2. Blitzschutz-Funkenstreckenanordnung nach Anspruch 1, wobei die erste divergierende Elektrode (21a) eine Unterbrechungsstelle (22) aufweist, so dass die erste divergierende Elektrode (21a) einen der Löschkammer (25) zugewandten Elektrodenbereich (23) aufweist, der nur vom Netzfolgestrom erreichbar ist, und wobei die Indikatoreinrichtung (4') zwischen den ersten Hauptanschluss (1a) und den Elektrodenbereich (23) geschaltet ist.

3. Blitzschutz-Funkenstreckenanordnung nach Anspruch 1, wobei die Löschkammer (25) eine Mehrzahl von Löschblechen (21c) aufweist und wobei die Indikatoreinrichtung (4") zwischen eines der Löschbleche (21c) und den zweiten Hauptanschluss (1b) geschaltet ist.

4. Blitzschutz-Funkenstreckenanordnung nach Anspruch 3, wobei eine Strombegrenzungseinrichtung (28) in Reihe zur Indikatoreinrichtung (4") geschaltet ist.

5. Blitzschutz-Funkenstreckenanordnung nach Anspruch 3 oder 4, wobei das eine Löschblech (21c) eine Unterbrechungsstelle (22') aufweist, welche derart angeordnet ist, dass eine elektrische Verbindung zur Indikatoreinrichtung (4") erst nach Einlaufen des Netzfolgestrom-Lichtbogens in die Löschkammer (25) gebildet ist.

6. Blitzschutz-Funkenstreckenanordnung nach Anspruch 1, wobei die Löschkammer (25) eine Mehrzahl von Löschblechen (21c) aufweist, wobei die Indikatoreinrichtung (4"; 4‴) zwischen eine erste und zweite Spannungssonde (33a, 33b) geschaltet ist und wobei die erste und zweite Spannungssonde (33a, 33b) zwischen jeweils zwei unterschiedlichen benachbarten Löschblechen (21c) angeordnet sind.

7. Blitzschutz-Funkenstreckenanordnung nach Anspruch 1, wobei die Löschkammer (25) eine Mehrzahl von Löschblechen (21c) aufweist, wobei die Indikatoreinrichtung (4") zwischen eine Spannungssonde (33) und den zweiten Hauptanschluss (1b) geschaltet ist und wobei die Spannungssonde (33) zwischen zwei benachbarten Löschblechen (21c) angeordnet ist.

8. Blitzschutz-Funkenstreckenanordnung nach Anspruch 1, wobei die Löschkammer (25) eine Mehrzahl von Löschblechen (21c) aufweist, wobei die Indikatoreinrichtung (4"; 4‴) zwischen zwei Löschbleche (21c) geschaltet ist.

9. Blitzschutz-Funkenstreckenanordnung nach einem der Ansprüche 1 bis 8, wobei die Indikatoreinrichtung (4`; 4"; 4‴) eine Indikatorsicherung (4`; 4") aufweist, durch welche ein mechanisches Stellglied (S) betätigbar ist, wobei durch das mechanische Stellglied (S) eine Schaltereinrichtung (11) zum Aktivieren des Brückenzünders (7) schließbar ist.

10. Blitzschutz-Funkenstreckenanordnung nach Anspruch 9, wobei eine Stromweiche (10) parallel zur Indikatorsicherung (4') geschaltet ist.

11. Blitzschutz-Funkenstreckenanordnung nach Anspruch 6 oder 8, wobei die Indikatoreinrichtung (4`; 4'; 4‴) eine Indikatorsicherung (4‴) aufweist und der Brückenzünder (7) parallel zur Indikatorsicherung (4‴) geschaltet ist.

12. Blitzschutz-Funkenstreckenanordnung nach Anspruch 11, wobei eine Strombegrenzungseinrichtung (28) in Reihe zur Indikatoreinrichtung (4‴) geschaltet ist.

13. Blitzschutz-Funkenstreckenanordnung nach einem der vorhergehenden Ansprüche, wobei die Stromhöhe und die Stromdauer des Netzfolgestromverlaufs oder des entsprechenden Anteils des Netzfolgestromverlaufs in das erste vorbestimmte Kriterium eingehen, insbesondere die Stromhöhe quadratisch und die Stromdauer linear in das erste vorgegebene Kriterium eingehen.

14. Blitzschutz-Funkenstreckenanordnung nach einem der vorhergehenden Ansprüche, wobei eine weitere Indikatoreinrichtung (4a) zum Erfassen des Impulsstromverlaufs oder eines entsprechenden Anteils des Impulsstromverlaufs und zum Triggern der Schmelzsicherungseinrichtung (8) durch Aktivieren des Brückenzünders (7), wenn der erfasste Impulsstromverlaufs oder der entsprechende Anteil des Impulsstromverlaufs ein zweites vorgegebenes Kriterium erfüllt, in Reihe zur Schmelzsicherungseinrichtung (8) geschaltet ist.

15. Blitzschutz-Funkenstreckenanordnung nach Anspruch 14, wobei die weitere Indikatoreinrichtung (4a) eine weitere Indikatorsicherung (4a) aufweist, durch welche das mechanische Stellglied (S) oder ein weiteres mechanisches Stellglied (S') betätigbar ist, wobei durch das mechanische Stellglied (S) die Schaltereinrichtung (11) oder durch das weitere mechanische Stellglied (S') eine weitere Schaltereinrichtung (S') zum Aktivieren des Brückenzünders (7) schließbar ist.

16. Blitzschutz-Funkenstreckenanordnung nach Anspruch 15, wobei eine weitere Stromweiche (10a) parallel zur weiteren Indikatorsicherung (4a) geschaltet ist.

17. Blitzschutz-Funkenstreckenanordnung nach Anspruch 15 oder 16, wobei das mechanische Stellglied (S) oder das weitere mechanische Stellglied (S') derart gestaltet ist, dass das Aktivieren des Brückenzünders (7) um eine vorgegebene Zeitspanne verzögerbar ist, welche derart gewählt ist, dass der Impulsstrom im Wesentlichen abgeklungen ist, bevor der Brückenzünder (7) aktiviert wird.

18. Blitzschutz-Funkenstreckenanordnung nach Anspruch 17, wobei die vorgegebene Zeitspanne im Bereich 1 ms bis 5 ms liegt.

19. Blitzschutz-Funkenstreckenanordnung nach einem der Ansprüche 14 bis 18, wobei die Schaltereinrichtung (11) oder noch eine weitere Schaltereinrichtung (11") zum Aktivieren des Brückenzünders (7) durch eine Erfassungseinrichtung für sekundäre Parameter (α, ϑ, p), insbesondere Temperatur (ϑ), Druck (p) und Ausdehnung (α), schließbar ist.

20. Blitzschutz-Funkenstreckenanordnung nach einem der Ansprüche 14 bis 19, wobei die Stromhöhe und die Stromdauer des Impulsstromverlaufs oder des entsprechenden Anteils des Impulsstromverlaufs in das zweite vorbestimmte Kriterium eingehen, insbesondere die Stromhöhe quadratisch und die Stromdauer linear in das zweite vorgegebene Kriterium eingehen.

21. Verfahren zum Betreiben einer Blitzschutz-Funkenstreckenanordnung, welche aufweist:
eine Blitzschutz-Funkenstrecke (1; 1'), welche einen ersten Hauptanschluss (1a) und einen zweiten Hauptanschluss (1b) aufweist,
wobei an den ersten Hauptanschluss (1a) eine erste Spannungsleitung (S1) eines Versorgungsnetzes und an den zweiten Hauptanschluss (1b) eine zweite Spannungsleitung des Versorgungsnetzes anschließbar ist;
eine durch einen Brückenzünder (7) triggerbare Schmelzsicherungseinrichtung (8), welche zwischen die erste oder zweite Spannungsleitung (S1, S2) und den entsprechenden Hauptanschluss (1a, 1b) der Blitzschutz-Funkenstrecke (1; 1`) geschaltet ist; und
wobei die Blitzschutz-Funkenstrecke (1; 1') eine erste und eine zweite divergierende Elektrode (21a, 21b) und eine Löschkammer (25) aufweist,
wobei das Verfahren die Schritte aufweist:
Erfassen sich an einen Impulsstromverlauf anschließenden Netzfolgestromverlaufs oder eines entsprechenden Anteils des Netzfolgestromverlaufs und Triggern der Schmelzsicherungseinrichtung (8) durch Aktivieren des Brückenzünders (7), wenn der erfasste Netzfolgestromverlauf oder der entsprechende Anteil des Netzfolgestromverlaufs ein erstes vorgegebenes Kriterium erfüllt,
wobei der Netzfolgestromverlauf oder der entsprechende Anteil des Netzfolgestromverlaufs im Laufbereich (L) des Netzfolgestrom-Lichtbogens erfasst wird.

22. Verfahren nach Anspruch 21, wobei der Impulsstromverlaufs oder ein entsprechender Anteil des Impulsstromverlaufs erfasst wird und die Schmelzsicherungseinrichtung (8) durch Aktivieren des Brückenzünders (7) getriggert wird, wenn der erfasste Impulsstromverlaufs oder der entsprechende Anteil des Impulsstromverlaufs ein zweites vorgegebenes Kriterium erfüllt.

23. Verfahren nach Anspruch 22, wobei das Aktivieren des Brückenzünders (7) um eine vorgegebene Zeitspanne verzögert wird, welche derart gewählt ist, dass der Impulsstrom im Wesentlichen abgeklungen ist, bevor der Brückenzünder (7) aktiviert wird.

24. Verfahren nach Anspruch 23, wobei die vorgegebene Zeitspanne im Bereich 1 ms bis 5 ms liegt.

## Claims

1. Lightning protection spark gap assembly, comprising:
a lightning protection spark gap (1; 1') comprising a first main terminal (1a) and a second main terminal (1b);
a first voltage line (S1) of a supply network being connectable to the first main terminal (1a) and a second voltage line of the supply network being connectable to the second main terminal (1b);
a fuse device (8) triggerable by an electric match (7) and connected between the first or second voltage line (S1, S2) and the corresponding main terminal (1a, 1b) of the lightning protection spark gap (1; 1'); and
an indicator device (4'; 4"; 4‴) for detecting secondary network current characteristic, which follows a pulse current characteristic, or a corresponding portion of the secondary network current characteristic, and for triggering the fuse device (8) by activating the electric match (7) if the detected secondary network current characteristic or the corresponding portion of the secondary network current characteristic meets a first predetermined criterion,
the lightning protection spark gap (1; 1') having a first and a second diverging electrode (21a, 21b) and an arcing chamber (25);
wherein the indicator device (4'; 4"; 4‴) is electrically connected to the first or second diverging electrode (21a, 21b) and/or to the arcing chamber (25) so as to detect the secondary network current characteristic or the corresponding portion of the secondary network current characteristic in the travel region (L) of the arc.

2. Lightning protection spark gap assembly according to claim 1, wherein the first diverging electrode (21a) has an interruption point (22) in such a way that the first diverging electrode (21a) has an electrode region (23) which faces the arcing chamber (25) and which is only accessible to the secondary network current, and wherein the indicator device (4') is connected between the first main terminal (1a) and the electrode region (23).

3. Lightning protection spark gap assembly according to claim 1, wherein the arcing chamber (25) has a plurality of metal extinguishing plates (21c), and wherein the indicator device (4") is connected between one of the metal extinguishing plates (21c) and the second main terminal (1b) .

4. Lightning protection spark gap assembly according to claim 3, wherein a current limiting device (28) is connected in series with the indicator device (4").

5. Lightning protection spark gap assembly according to either claim 3 or claim 4, wherein one metal extinguishing plate (21c) has an interruption point (22') arranged in such a way that an electric connection to the indicator device (4") is only formed after the secondary network current arc passes into the arcing chamber (25).

6. Lightning protection spark gap assembly according to claim 1, wherein the arcing chamber (25) has a plurality of metal extinguishing plates (21c), the indicator device (4"; 4‴) being connected between a first and a second voltage probe (33a, 33b), and the first and second voltage probe (33a, 33b) each being arranged between two different adjacent metal extinguishing plates (21c).

7. Lightning protection spark gap assembly according to claim 1, wherein the arcing chamber (25) has a plurality of metal extinguishing plates (21c), the indicator device (4") being connected between a voltage probe (33) and the second main terminal (1b), and the voltage probe (33) being arranged between two adjacent metal extinguishing plates (21c) .

8. Lightning protection spark gap assembly according to claim 1, wherein the arcing chamber (25) has a plurality of metal extinguishing plates (21c), the indicator device (4", 4‴) being connected between two metal extinguishing plates (21c).

9. Lightning protection spark gap assembly according to any of claims 1 to 8, wherein the indicator device (4', 4", 4‴) has an indicator fuse (4', 4'') by way of which a mechanical actuator (S) can be activated, a switch device (11) being closable by way of the mechanical actuator (S) to activate the electric match (7).

10. Lightning protection spark gap assembly according to claim 9, wherein a current switch (10) is connected in parallel with the indicator fuse (4').

11. Lightning protection spark gap assembly according to either claim 6 or claim 8, wherein the indicator device (4'; 4', 4‴) has an indicator fuse (4‴) and the electric match (7) is connected in parallel with the indicator fuse (4‴).

12. Lightning protection spark gap assembly according to claim 11, wherein a current limiting device (28) is connected in series with the indicator device (4‴).

13. Lightning protection spark gap assembly according to any of the preceding claims, wherein the current level and current duration of the secondary network current characteristic or of the corresponding portion of the secondary network current characteristic contribute to the first predetermined criterion, in particular the current level contributing quadratically and the current duration contributing linearly to the first predetermined criterion.

14. Lightning protection spark gap assembly according to any of the preceding claims, wherein a further indicator device (4a), for detecting the pulse current characteristic or a corresponding portion of the pulse current characteristic and for triggering the fuse device (8) by activating the electric match (7) if the detected pulse current characteristic or the corresponding portion of the pulse current characteristic meets a second predetermined criterion, is connected in series with the fuse device (8).

15. Lightning protection spark gap assembly according to claim 14, wherein the further indicator device (4a) has a further indicator fuse (4a) by way of which the mechanical actuator (S) or a further mechanical actuator (S') can be activated, the switch device (11) being closable by way of the mechanical actuator (S) or a further switch device (S') being closable by way of the further mechanical actuator (S') to activate the electric match (7).

16. Lightning protection spark gap assembly according to claim 15, wherein a further current switch (10a) is connected in parallel with the further indicator fuse (4a).

17. Lightning protection spark gap assembly according to either claim 15 or claim 16, wherein the mechanical actuator (S) or the further mechanical actuator (S') is configured in such a way that the activation of the electric match (7) can be delayed by a predetermined timespan, which is selected in such a way that the pulse current has substantially decayed before the electric match (7) is activated.

18. Lightning protection spark gap assembly according to claim 17, wherein the predetermined timespan is in a range of 1 ms to 5 ms.

19. Lightning protection spark gap assembly according to any of claims 14 to 18, wherein the switch device (11) or another further switch device (11'') is closable to activate the electric match (7) by way of a detection device for secondary parameters (α, ϑ, p), in particular temperature (ϑ), pressure (p) and expansion (α).

20. Lightning protection spark gap assembly according to any of claims 14 to 19, wherein the current level and the current duration of the pulse current characteristic or of the corresponding portion of the pulse current characteristic contribute to the second predetermined criterion, in particular the current level contributing quadratically and the current duration contributing linearly to the second predetermined criterion.

21. Method for operating a lightning protection spark gap assembly, comprising:
a lightning protection spark gap (1; 1') comprising a first main terminal (1a) and a second main terminal (1b);
a first voltage line (S1) of a supply network being connectable to the first main terminal (1a) and a second voltage line of the supply network being connectable to the second main terminal (1b);
a fuse device (8) triggerable by an electric match (7) and connected between the first or second voltage line (S1, S2) and the corresponding main terminal (1a, 1b) of the lightning protection spark gap (1; 1'); and
the lightning protection spark gap (1; 1') having a first and a second diverging electrode (21a, 21b) and an arcing chamber (25);
the method comprising the steps of:
detecting secondary network current characteristic, which follows a pulse current characteristic, or a corresponding portion of the secondary network current characteristic, and triggering the fuse device (8) by activating the electric match (7) if the detected secondary network current characteristic or the corresponding portion of the secondary network current characteristic meets a first predetermined criterion,
wherein the secondary network current characteristic or the corresponding portion of the secondary network current characteristic is detected in the travel region (L) of the secondary network current arc.

22. Method according to claim 21, wherein the pulse current characteristic or a corresponding portion of the pulse current characteristic is detected and the fuse device (8) is triggered by activating the electric match (7) if the detected pulse current characteristic or the corresponding portion of the pulse current characteristic meets a second predetermined criterion.

23. Method according to claim 22, wherein the activation of the electric match (7) is delayed by a predetermined timespan, which is selected in such a way that the pulse current has substantially decayed before the electric match (7) is activated.

24. Method according to claim 23, wherein the predetermined timespan is in a range of 1 ms to 5 ms.

## Revendications

1. Agencement éclateur de protection contre la foudre, qui présente :
un éclateur de protection contre la foudre (1 ; 1'), qui présente une première connexion principale (1a) et une deuxième connexion principale (1b) ;
dans lequel une première ligne de tension (S1) d'un réseau d'alimentation peut être connectée à la première connexion principale (1a) et une deuxième ligne de tension du réseau d'alimentation peut être connectée à la deuxième connexion principale (1b) ;
un dispositif fusible (8) pouvant être déclenché par une amorce à pont (7), lequel est branché entre la première ou la deuxième ligne de tension (S1, S2) et la connexion principale correspondante (1a, 1b) de l'éclateur de protection contre la foudre (1 ; 1') ; et
un dispositif indicateur (4' ; 4" ; 4''') pour détecter une courbe de courant de suite de réseau faisant suite à une courbe de courant impulsionnel ou une partie correspondante de la courbe de courant de suite de réseau et pour déclencher le dispositif fusible (8) par activation de l'amorce à pont (7) lorsque la courbe de courant de suite de réseau ou la partie correspondante de la courbe de courant de suite de réseau détectée satisfait un premier critère prédéfini,
dans lequel l'éclateur de protection contre la foudre (1 ; 1') présente une première et une deuxième électrode divergente (21a, 21b) et une chambre d'extinction (25) ; dans lequel le dispositif indicateur (4' ; 4" ; 4''') est relié électriquement à la première ou à la deuxième électrode divergente (21a, 21b) et/ou à la chambre d'extinction (25) de telle sorte qu'il détecte la courbe de courant de suite de réseau ou la partie correspondante de la courbe de courant de suite de réseau dans la zone de propagation (L) de l'arc électrique.

2. Agencement éclateur de protection contre la foudre selon la revendication 1, dans lequel la première électrode divergente (21a) présente un point d'interruption (22), de sorte que la première électrode divergente (21a) présente une zone d'électrode (23) tournée vers la chambre d'extinction (25), qui ne peut être atteinte que par le courant de suite de réseau, et dans lequel le dispositif indicateur (4') est branché entre la première connexion principale (1a) et la zone d'électrode (23).

3. Agencement éclateur de protection contre la foudre selon la revendication 1, dans lequel la chambre d'extinction (25) présente une pluralité de tôles d'extinction (21c) et dans lequel le dispositif indicateur (4') est branché entre l'une des tôles d'extinction (21c) et la deuxième connexion principale (1b).

4. Agencement éclateur de protection contre la foudre selon la revendication 3, dans lequel un dispositif de limitation de courant (28) est branché en série avec le dispositif indicateur (4'').

5. Agencement éclateur de protection contre la foudre selon la revendication 3 ou 4, dans lequel ladite une tôle d'extinction (21c) présente un point d'interruption (22') qui est disposé de telle sorte qu'une liaison électrique avec le dispositif indicateur (4") n'est formée qu'après l'entrée de l'arc électrique du courant de suite de réseau dans la chambre d'extinction (25).

6. Agencement éclateur de protection contre la foudre selon la revendication 1, dans lequel la chambre d'extinction (25) présente une pluralité de tôles d'extinction (21c), dans lequel le dispositif indicateur (4" ; 4‴) est branché entre une première et une deuxième sonde de tension (33a, 33b) et dans lequel la première et la deuxième sonde de tension (33a, 33b) sont disposées chacune entre deux tôles d'extinction (21c) voisines différentes.

7. Agencement éclateur de protection contre la foudre selon la revendication 1, dans lequel la chambre d'extinction (25) présente une pluralité de tôles d'extinction (21c), dans lequel le dispositif indicateur (4") est branché entre une sonde de tension (33) et la deuxième connexion principale (1b) et dans lequel la sonde de tension (33) est disposée entre deux tôles d'extinction (21c) voisines.

8. Agencement éclateur de protection contre la foudre selon la revendication 1, dans lequel la chambre d'extinction (25) présente une pluralité de tôles d'extinction (21c), dans lequel le dispositif indicateur (4" ; 4''') est branché entre deux tôles d'extinction (21c).

9. Agencement éclateur de protection contre la foudre selon l'une des revendications 1 à 8, dans lequel le dispositif indicateur (4' ; 4" ; 4''') présente un fusible indicateur (4' ; 4'') qui permet d'actionner un organe de réglage mécanique (S), l'organe de réglage mécanique (S) permettant de fermer un dispositif de commutation (11) pour activer l'amorce à pont (7).

10. Agencement éclateur de protection contre la foudre selon la revendication 9, dans lequel un aiguillage de courant (10) est branché en parallèle avec le fusible indicateur (4').

11. Agencement éclateur de protection contre la foudre selon la revendication 6 ou 8, dans lequel le dispositif indicateur (4' ; 4" ; 4''') présente un fusible indicateur (4''') et l'amorce à pont (7) est branchée en parallèle avec le fusible indicateur (4‴).

12. Agencement éclateur de protection contre la foudre selon la revendication 11, dans lequel un dispositif de limitation de courant (28) est branché en série avec le dispositif indicateur (4‴).

13. Agencement éclateur de protection contre la foudre selon l'une des revendications précédentes, dans lequel le niveau de courant et la durée de courant de la courbe de courant de suite de réseau ou de la partie correspondante de la courbe de courant de suite de réseau entrent dans le premier critère prédéfini, en particulier le niveau de courant entre quadratiquement et la durée de courant entre linéairement dans le premier critère prédéfini.

14. Agencement éclateur de protection contre la foudre selon l'une des revendications précédentes, dans lequel un autre dispositif indicateur (4a) est branché en série avec le dispositif fusible (8) pour détecter la courbe de courant impulsionnel ou une partie correspondante de la courbe de courant impulsionnel et pour déclencher le dispositif fusible (8) par activation de l'amorce à pont (7) lorsque la courbe de courant impulsionnel ou la partie correspondante de la courbe de courant impulsionnel détectée satisfait un deuxième critère prédéfini.

15. Agencement éclateur de protection contre la foudre selon la revendication 14, dans lequel l'autre dispositif indicateur (4a) présente un autre fusible indicateur (4a) qui permet d'actionner l'organe de réglage mécanique (S) ou un autre organe de réglage mécanique (S'), dans lequel l'organe de réglage mécanique (S) permet de fermer le dispositif de commutation (11) ou l'autre organe de réglage mécanique (S') permet de fermer un autre dispositif de commutation (S') pour activer l'amorce à pont (7).

16. Agencement éclateur de protection contre la foudre selon la revendication 15, dans lequel un autre aiguillage de courant (10a) est branché en parallèle avec l'autre fusible indicateur (4a).

17. Agencement éclateur de protection contre la foudre selon la revendication 15 ou 16, dans lequel l'organe de réglage mécanique (S) ou l'autre organe de réglage mécanique (S') est conçu de telle sorte que l'activation de l'amorce à pont (7) peut être retardée d'un laps de temps prédéfini qui est choisi de manière à ce que le courant impulsionnel ait sensiblement diminué avant que l'amorce à pont (7) soit activée.

18. Agencement éclateur de protection contre la foudre selon la revendication 17, dans lequel le laps de temps prédéfini se situe dans la plage de 1 ms à 5 ms.

19. Agencement éclateur de protection contre la foudre selon l'une des revendications 14 à 18, dans lequel le dispositif de commutation (11) ou un autre dispositif de commutation (11") destiné à activer l'amorce à pont (7) peut être fermé par un dispositif de détection de paramètres secondaires (a, ϑ, p), en particulier la température (ϑ), la pression (p) et la dilatation (a).

20. Agencement éclateur de protection contre la foudre selon l'une des revendications 14 à 19, dans lequel le niveau de courant et la durée de courant de la courbe de courant impulsionnel ou de la partie correspondante de la courbe de courant impulsionnel entrent dans le deuxième critère prédéfini, en particulier le niveau de courant entre quadratiquement et la durée de courant entre linéairement dans le deuxième critère prédéfini.

21. Procédé pour faire fonctionner un agencement éclateur de protection contre la foudre qui présente :
un éclateur de protection contre la foudre (1 ; 1') qui présente une première connexion principale (1a) et une deuxième connexion principale (1b) ;
dans lequel une première ligne de tension (S1) d'un réseau d'alimentation peut être connectée à la première connexion principale (1a) et une deuxième ligne de tension du réseau d'alimentation peut être connectée à la deuxième connexion principale (1b) ;
un dispositif fusible (8) pouvant être déclenché par une amorce à pont (7), lequel est branché entre la première ou la deuxième ligne de tension (S1, S2) et la connexion principale correspondante (1a, 1b) de l'éclateur de protection contre la foudre (1 ; 1') ; et
dans lequel l'éclateur de protection contre la foudre (1 ; 1') présente une première et une deuxième électrode divergente (21a, 21b) et une chambre d'extinction (25) ; le procédé présentant les étapes consistant à :
détecter une courbe de courant de suite de réseau faisant suite à une courbe de courant impulsionnel ou une partie correspondante de la courbe de courant de suite de réseau et déclencher le dispositif fusible (8) par activation de l'amorce à pont (7) lorsque la courbe de courant de suite de réseau ou la partie correspondante de la courbe de courant de suite de réseau détectée satisfait un premier critère prédéfini,
dans lequel la courbe de courant de suite de réseau ou la partie correspondante de la courbe de courant de suite de réseau est détectée dans la zone de propagation (L) de l'arc électrique du courant de suite de réseau.

22. Procédé selon la revendication 21, dans lequel la courbe de courant impulsionnel ou une partie correspondante de la courbe de courant impulsionnel est détectée et le dispositif fusible (8) est déclenché par activation de l'amorce à pont (7) lorsque la courbe de courant impulsionnel ou la partie correspondante de la courbe de courant impulsionnel détectée satisfait un deuxième critère prédéfini.

23. Procédé selon la revendication 22, dans lequel l'activation de l'amorce à pont (7) est retardée d'un laps de temps prédéfini qui est choisi de manière à ce que le courant impulsionnel ait sensiblement diminué avant que l'amorce à pont (7) soit activée.

24. Procédé selon la revendication 23, dans lequel le laps de temps prédéfini se situe dans la plage de 1 ms à 5 ms.
